# EUROPÄISCHE PATENTANMELDUNG

(11) **EP 2 690 073 A1**
(43) Veröffentlichungstag der Anmeldung: **29.01.2014**
(21) Anmeldenummer: 13176511.7
(22) Anmeldetag: 15.07.2013
(51) Int. Cl.: C03C 17/00, B05D 3/06, B44C 1/00, B44D 5/00, C03C 23/00

(54) **Verfahren zu einer Herstellung einer Hausgerätevorrichtung und Hausgerätevorrichtung**

(30) Priorität: 26.07.2012 ES 201231208
(71) Anmelder: BSH Bosch und Siemens Hausgeräte GmbH, 81739 München (DE)
(72) Erfinder: Alaman Aguilar, Jorge, 50008 Zaragoza (ES); Artal Lahoz, Maria Carmen, 50007 Zaragoza (ES); Bunuel Magdalena, Miguel Angel, 50017 Zaragoza (ES); Escartin Barduzal, Andres, 50009 Zaragoza (ES); Ester Sola, Francisco Javier, 50001 Zaragoza (ES); Perez Cabeza, Pilar, 50008 Zaragoza (ES); Peña Torre, José Ignacio, 50004 Zaragoza (ES); Planas Layunta, Fernando, 50009 Zaragoza (ES); Sola Martinez, Daniel, 50009 Zaragoza (ES)

(57) **Zusammenfassung**

Die Erfindung geht aus von einem Verfahren zu einer Herstellung einer Hausgerätevorrichtung (10a; 10b), insbesondere einer Kochfeldvorrichtung (12a; 12b), mit zumindest einem Bauelement (14a; 14b), bei welchem in zumindest einem Verfahrensschritt das Bauelement (14a; 14b) aus einem Rohelement (16a; 16b) durch Aufschäumen wenigstens eines Bereichs (18a; 18b) hergestellt wird.

Um eine gattungsgemäße Hausgerätevorrichtung mit wenigstens einer vorteilhaft flexibel einstellbaren physikalischen Eigenschaft bereitzustellen, wird vorgeschlagen, dass zumindest ein durch das Aufschäumen erzeugter Hohlraum im wenigstens einen Bereich (18a; 18b) während des Aufschäumens zumindest teilweise durch wenigstens einen Feststoff aufgefüllt wird.

## Beschreibung

Die Erfindung geht aus von einem Verfahren zu einer Herstellung einer Hausgerätevorrichtung nach dem Oberbegriff des Anspruchs 1 und einer Hausgerätevorrichtung nach dem Oberbegriff des Anspruchs 9.

Aus der EP 2 072 478 A1 ist eine Kochfeldvorrichtung mit einem als eine Glaskeramikplatte ausgebildeten Bauelement bekannt, welches an einer seiner Oberflächen einen aufgeschäumten Bereich aufweist.

Die Aufgabe der Erfindung besteht insbesondere darin, eine gattungsgemäße Hausgerätevorrichtung mit wenigstens einer vorteilhaft flexibel einstellbaren physikalischen Eigenschaft bereitzustellen. Die Aufgabe wird erfindungsgemäß durch die kennzeichnenden Merkmale der Patentansprüche 1 und 9 gelöst, während vorteilhafte Ausgestaltungen und Weiterbildungen der Erfindung den Unteransprüchen entnommen werden können.

Die Erfindung geht aus von einem Verfahren zu einer Herstellung einer Hausgerätevorrichtung, insbesondere einer Kochfeldvorrichtung, mit zumindest einem Bauelement, bei welchem in zumindest einem Verfahrensschritt das Bauelement aus einem Rohelement durch Aufschäumen wenigstens eines Bereichs hergestellt wird.

Es wird vorgeschlagen, dass zumindest ein durch das Aufschäumen erzeugter Hohlraum im wenigstens einen Bereich während des Aufschäumens zumindest teilweise durch wenigstens einen Feststoff aufgefüllt wird. Unter einem "Rohelement" soll insbesondere ein Element verstanden werden, welches während des Verfahrens, insbesondere während des Verfahrensschritts, zumindest teilweise verändert wird und aus welchem das Bauelement hervorgeht. Vorzugsweise besteht das Rohelement wenigstens teilweise und besonders vorteilhaft wenigstens zu einem Großteil aus einer Glaskeramik. Darunter, dass das Rohelement "wenigstens zu einem Großteil" aus einer Glaskeramik besteht, soll insbesondere verstanden werden, dass das Rohelement mit einem Massenanteil von wenigstens 60 %, insbesondere von zumindest 70 %, vorzugsweise von mindestens 80 % und besonders vorteilhaft von wenigstens 90 % aus einer Glaskeramik besteht. Unter einem "Aufschäumen" des wenigstens einen Bereichs soll in diesem Zusammenhang insbesondere eine Erhöhung wenigstens eines Anteils zumindest eines von Material des Rohelements verschiedenen Fremdmaterials im wenigstens einen Bereich verstanden werden. Das zumindest eine Fremdmaterial umfasst dabei insbesondere ein gasförmiges Material, insbesondere Luft, und/oder ein festes Material, insbesondere den wenigstens einen Feststoff. Das Aufschäumen geht vorzugsweise durch eine insbesondere lokalisierte Energiedeposition vonstatten, vorzugsweise mittels einer Bestrahlung durch elektromagnetische Strahlung, was zu einer Verdampfung von Material des Rohelements führt. Durch eine anschließende Abkühlung und Erstarrung des Materials ergeben sich Hohlräume im Material und daraus resultierend eine Aufschäumung des Materials. Unter einem "Hohlraum" im wenigstens einen Bereich soll insbesondere ein räumlicher Bereich verstanden werden, welcher frei von Material des Rohelements ist. Vorzugsweise ist der wenigstens eine Hohlraum ein allseitig von Material umschlossener Hohlraum. Unter einem "allseitig von Material umschlossenen Hohlraum" soll in diesem Zusammenhang insbesondere ein Hohlraum verstanden werden, welcher allseitig komplett von Material umschlossen ist. Insbesondere wird durch das Aufschäumen eine Vielzahl von Hohlräumen geschaffen, die insbesondere zumindest teilweise allseitig von Material umschlossen sind. Darunter, dass der zumindest eine durch das Aufschäumen erzeugte Hohlraum "während des Aufschäumens" zumindest teilweise durch den wenigstens einen Feststoff aufgefüllt wird, soll insbesondere verstanden werden, dass eine Erzeugung des wenigstens einen Hohlraums und eine Auffüllung des wenigstens einen Hohlraums mit dem wenigstens einen Feststoff zumindest weitgehend gleichzeitig ablaufen. Darunter, dass zwei Vorgänge "zumindest weitgehend" gleichzeitig ablaufen, soll insbesondere verstanden werden, dass beide Vorgänge innerhalb einer Zeitspanne von höchstens 10 s, insbesondere von maximal 5 s, vorzugsweise von höchstens 1 s und besonders vorteilhaft von maximal 0,5 s starten und vollständig abgeschlossen sind. Unter einem "Feststoff" soll in diesem Zusammenhang insbesondere ein Material verstanden werden, welches für sämtliche Temperaturen unterhalb von 600°C, insbesondere unterhalb von 300°C, einen festen Aggregatszustand einnimmt.

Hierdurch kann eine gattungsgemäße Hausgerätevorrichtung mit wenigstens einer vorteilhaft flexibel einstellbaren physikalischen Eigenschaft bereitgestellt werden. Insbesondere können durch die Wahl des Feststoffs verschiedene physikalische Eigenschaften der Hausgerätevorrichtung und insbesondere des Bauelements angepasst werden. So kann beispielsweise durch ein Auffüllen des wenigstens einen Hohlraums mit Zirconiumdioxid und/oder Aluminiumoxid eine mechanische Festigkeit des Bauelements erhöht werden, wodurch insbesondere einer Reduzierung der mechanischen Festigkeit durch das Aufschäumen entgegengewirkt werden kann, insbesondere wenn der wenigstens eine Bereich in einer Einbaulage eines die Hausgerätevorrichtung aufweisenden Hausgeräts zugänglich und insbesondere einer erhöhten Beanspruchung und/oder einem erhöhten Verschleiß ausgesetzt ist. Ferner kann ebenfalls durch Zugabe einer auf Aluminiumoxid basierenden eutektischen Keramik und/oder eines metallischen Pulvers eine Erhöhung der mechanischen Festigkeit erzielt werden. Zusätzlich kann durch Zugabe des Feststoffs eine Oberflächenrauigkeit des wenigstens einen aufgeschäumten Bereichs reduziert werden, wodurch insbesondere ein Reinigungsaufwand reduziert werden kann. Des Weiteren kann durch Zugabe des wenigstens einen Feststoffs eine Wärmeleitfähigkeit des Bauelements angepasst werden. So wird einerseits durch das Aufschäumen und daraus resultierend durch Lufteinschlüsse die Wärmeleitfähigkeit herabgesetzt, andererseits kann durch Zugabe bestimmter Feststoffe, beispielsweise Aluminiumoxid, die Wärmeleitfähigkeit wieder erhöht werden. Als weitere Feststoffe sind Farbpigmente sowie fluoreszierende und/oder phosphoreszierende Materialien denkbar, wodurch eine vorteilhafte Anpassung von optischen Eigenschaften des Bauelements erfolgen kann, insbesondere zusätzlich zu den bereits durch die Aufschäumung erzielbaren optischen und ästhetischen Effekten. Ferner kann insbesondere durch Wahl eines bestimmten Feststoffs eine optische Anmutung eines aufgeschäumten Bereichs mit Feststoffeinschlüssen identisch sein zu einem aufgeschäumten Bereich, welcher frei von Feststoffeinschlüssen ist.

Ferner wird vorgeschlagen, dass der wenigstens eine Bereich ein oberflächennaher Bereich des Rohelements ist. Unter einem "oberflächennahen Bereich" des Rohelements soll insbesondere ein Bereich verstanden werden, welcher wenigstens eine Oberfläche des Rohelements umfasst. Insbesondere erstreckt sich der oberflächennahe Bereich bis zu einer Tiefe von höchstens 600 µm, insbesondere von maximal 500 µm, vorzugsweise von höchstens 400 µm und besonders vorteilhaft von maximal 300 µm gemessen von einer Oberfläche des Rohelements in das Rohelement hinein. Hierdurch können mechanische Spannungen im Bauelement minimiert werden. Ferner kann ein vorteilhaft einfaches Einbringen des wenigstens einen Feststoffs in dem zumindest einen Hohlraum ermöglicht werden.

Vorteilhaft wird das Aufschäumen mittels einer Laserbestrahlung durchgeführt. Unter einer "Laserbestrahlung" soll in diesem Zusammenhang insbesondere eine Behandlung verstanden werden, bei welcher Laserlicht auf den wenigstens einen Bereich des Rohelements fokussiert wird, um eine Materialänderung in einem Laserfokus zu bewirken. Vorzugsweise wird hierfür ein gepulster Laser verwendet, insbesondere ein Festkörperlaser und besonders vorteilhaft ein diodengepumpter Festkörperlaser. Hierdurch kann ein vorteilhaft kostengünstiges, schnelles, kontrollier- und reproduzierbares Aufschäumen des wenigstens einen Bereichs erreicht werden. Ferner kann ein vorteilhaftes Einbringen des wenigstens einen Feststoffs in den zumindest einen Hohlraum ermöglicht werden. Des Weiteren kann durch die Laserbestrahlung ein Kristallwachstum im wenigstens einen Bereich induziert werden, welches zu einer Erhöhung der Wärmeleitfähigkeit beitragen kann. Schließlich kann das Verfahren durch eine Anpassung von Laserparametern vorteilhaft modifiziert werden.

In einer bevorzugten Ausgestaltung der Erfindung wird vorgeschlagen, dass der wenigstens eine Feststoff vor dem Aufschäumen und insbesondere unmittelbar vor dem Aufschäumen auf zumindest einer Oberfläche des Rohelements bereitgestellt wird. Darunter, dass der wenigstens eine Feststoff vor dem Aufschäumen "auf zumindest einer Oberfläche des Rohelements bereitgestellt wird", soll insbesondere verstanden werden, dass der Feststoff mit der zumindest einen Oberfläche des Rohelements in Kontakt gebracht wird, insbesondere unmittelbar vor dem Aufschäumen. Hierdurch kann eine Zuverlässigkeit des Verfahrens vorteilhaft gesteigert werden.

In einer besonders bevorzugten Ausgestaltung der Erfindung wird vorgeschlagen, dass der wenigstens eine Feststoff vor dem Aufschäumen und insbesondere unmittelbar vor dem Aufschäumen zumindest als ein Bestandteil einer Lösung bereitgestellt wird. Vorzugsweise wird während des Aufschäumens ein Lösungsmittel der Lösung verdampft, wobei der wenigstens eine Feststoff insbesondere in den zumindest einen durch das Aufschäumen erzeugten Hohlraum eingebracht wird. Als Lösungsmittel der Lösung kommen insbesondere flüchtige Substanzen, insbesondere Alkohole, vorzugsweise Ethanol und/oder Propanol und/oder Isopropanol, und/oder Ketone, vorzugsweise Aceton, in Frage. Hierdurch kann eine Zuverlässigkeit und Reproduzierbarkeit vorteilhaft gesteigert werden. Insbesondere kann eine weitgehend gleichmäßige Verteilung des wenigstens einen Feststoffs im aufgeschäumten Bereich erreicht werden.

Vorteilhaft wird die Lösung vor dem Aufschäumen und insbesondere unmittelbar vor dem Aufschäumen in einem zumindest weitgehend räumlich begrenzten Bereich bereitgestellt. Unter einem "zumindest weitgehend räumlich begrenzten Bereich" soll insbesondere ein Bereich mit einer maximalen Erstreckung von höchstens 10 cm, insbesondere von maximal 5 cm, vorzugsweise von höchstens 2,5 cm und besonders vorteilhaft von maximal 1 cm verstanden werden. Hierdurch kann vorteilhaft Material eingespart werden. Ferner kann eine präzise Verarbeitung ermöglicht werden.

Wenn die Lösung vor dem Aufschäumen und insbesondere unmittelbar vor dem Aufschäumen mittels wenigstens eines Sprühkopfes bereitgestellt wird, welcher gemeinsam mit zumindest einem Laserfokus relativ zum Rohelement bewegt wird, kann eine besonders zuverlässige und reproduzierbare Verarbeitung erreicht werden. Ferner kann ein Verarbeitungsaufwand vorteilhaft reduziert werden. Darunter, dass der wenigstens eine Sprühkopf "gemeinsam mit zumindest einem Laserfokus relativ zum Rohelement bewegt wird", soll insbesondere verstanden werden, dass der wenigstens eine Sprühkopf und der zumindest eine Laserfokus mit gleichbleibendem Abstand zueinander und insbesondere mit identischer Bewegungsgeschwindigkeit bewegt werden. Insbesondere sind die Orientierung und/oder die Bewegungsrichtung des wenigstens einen Sprühkopfs und des zumindest einen Laserfokus so aufeinander abgestimmt, dass der wenigstens eine Sprühkopf einen Teil der Oberfläche des Rohelements mit der Lösung benetzt, bevor der zumindest eine Laserfokus den Teil der Oberfläche des Rohelements erreicht. Hierbei können insbesondere der zumindest eine Laserfokus und der wenigstens eine Sprühkopf ortsfest gehalten werden und die Rohplatte wird relativ zum zumindest einen Laserfokus und zum wenigstens einen Sprühkopf bewegt. Vorzugsweise wird jedoch die Rohplatte ortsfest gehalten und der zumindest eine Laserfokus und der wenigstens eine Sprühkopf werden relativ zur Rohplatte bewegt. Hierdurch kann ein Verarbeitungsaufwand besonders vorteilhaft reduziert werden.

In einer weiteren Ausgestaltung der Erfindung wird vorgeschlagen, dass die Lösung vor dem Aufschäumen und insbesondere unmittelbar vor dem Aufschäumen in einem Tauchbad bereitgestellt wird, in welches das Rohelement zumindest teilweise eingetaucht wird. Hierbei ist sicherzustellen, dass die Lösung eine ausreichend hohe Durchlässigkeit für ein beim Aufschäumen verwendetes Laserlicht aufweist. Unter einer "ausreichend hohen Durchlässigkeit" soll in diesem Zusammenhang insbesondere eine derart hohe Durchlässigkeit verstanden werden, dass ein Verdampfen eines Lösungsmittels der Lösung in einem Umgebungsbereich des wenigstens einen Bereichs des Rohelements zumindest weitgehend ausgeschlossen ist. Hierdurch kann eine vorteilhaft einfache Herstellungsvorrichtung bereitgestellt werden. Ferner kann ein vorteilhaftes Aufschäumen großer Bereiche ermöglicht werden.

Die Erfindung geht ferner aus von einer Hausgerätevorrichtung, insbesondere einer Kochfeldvorrichtung, welche insbesondere durch ein erfindungsgemäßes Verfahren hergestellt ist, mit einem Bauelement, welches wenigstens einen aufgeschäumten Bereich aufweist.

Es wird vorgeschlagen, dass wenigstens ein allseitig von Material umschlossener Hohlraum im wenigstens einen Bereich zumindest teilweise durch wenigstens einen Feststoff aufgefüllt ist. Vorzugsweise ist der aufgeschäumte Bereich in einem Bereich einer Oberfläche des Bauelements angeordnet. Vorzugsweise weist der aufgeschäumte Bereich eine Schichtdichte zwischen 100 µm und 600 µm, insbesondere zwischen 150 µm und 550 µm, vorzugsweise zwischen 200 µm und 500 µm und besonders vorteilhaft zwischen 300 µm und 400 µm auf. Durch eine solche Ausgestaltung kann eine gattungsgemäße Hausgerätevorrichtung mit wenigstens einer vorteilhaft flexibel einstellbaren physikalischen Eigenschaft bereitgestellt werden. Insbesondere können eine mechanische Festigkeit und/oder eine Wärmeleitfähigkeit und/oder optische Eigenschaften angepasst werden.

Ferner wird ein Hausgerät, insbesondere ein Gargerät und vorzugsweise ein Kochfeld, mit einer erfindungsgemäßen Hausgerätevorrichtung vorgeschlagen. Vorzugsweise ist die erfindungsgemäße Hausgerätevorrichtung als eine Hausgeräteplatte, insbesondere als eine Gargeräteplatte und vorzugsweise als eine Kochfeldplatte, ausgebildet. Hierdurch kann ein Hausgerät bereitgestellt werden, welches eine Hausgerätevorrichtung mit wenigstens einer vorteilhaft flexibel einstellbaren physikalischen Eigenschaft aufweist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer als Kochfeldplatte ausgebildeten Kochfeldvorrichtung in einer Draufsicht,
- Fig. 2: die Kochfeldvorrichtung aus Fig. 1 in einer schematischen und nicht maßstabsgetreuen Schnittdarstellung entlang einer Linie II-II in Fig. 1,
- Fig. 3: eine schematische und nicht maßstabsgetreue Darstellung eines Verfahrensschritts eines Verfahrens zu einer Herstellung der Kochfeldvorrichtung aus Fig. 1,
- Fig. 4: ein weiteres Kochfeld mit einer alternativen als Kochfeldplatte ausgebildeten Kochfeldvorrichtung in einer Draufsicht und
- Fig. 5: eine schematische und nicht maßstabsgetreue Darstellung eines Verfahrensschritts eines Verfahrens zu einer Herstellung der Kochfeldvorrichtung aus Fig. 4.

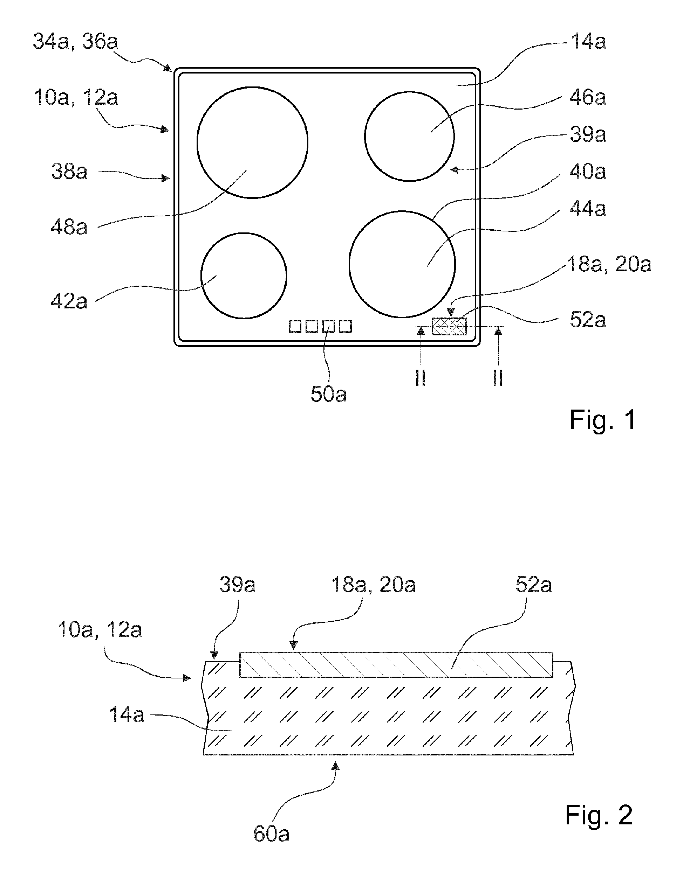

Figur 1 zeigt ein als Kochfeld 36a ausgebildetes Hausgerät 34a in einer Draufsicht. Das Kochfeld 36a umfasst eine als Kochfeldvorrichtung 12a ausgebildete Hausgerätevorrichtung 10a. Bei der Kochfeldvorrichtung 12a handelt es sich um eine Kochfeldplatte 38a. Die Kochfeldplatte 38a umfasst ein plattenartiges Bauelement 14a. Das Bauelement 14a besteht zumindest im Wesentlichen aus einer Glaskeramik. Die Kochfeldplatte 38a ist in einer Einbaulage horizontal angeordnet und zu einem Aufstellen von Gargeschirr auf eine Oberseite 39a des Bauelements 14a vorgesehen. Hierzu weist die Kochfeldplatte 38a auf dem Bauelement 14a angeordnete Markierungen 40a auf, durch welche Heizzonen 42a, 44a, 46a, 48a und berührempfindliche Bedienelemente 50a gekennzeichnet sind. Jeder der Heizzonen 42a, 44a, 46a, 48a ist unterhalb der Kochfeldplatte 38a jeweils eine Heizeinheit zugeordnet (nicht dargestellt). Jede der Heizeinheiten umfasst zumindest ein Induktionsheizelement. Das Bauelement 14a umfasst einen aufgeschäumten Bereich 18a. Der aufgeschäumte Bereich 18a stellt ein Markenlogo 52a dar.

Figur 2 zeigt die Kochfeldvorrichtung 12a in einer schematischen und nicht maßstabsgetreuen Schnittdarstellung entlang einer Linie II-II in Figur 1. Bei dem aufgeschäumten Bereich 18a handelt es sich um einen oberflächennahen Bereich 20a. Der aufgeschäumte Bereich 18a ist auf der Oberseite 39a des Bauelements 14a angeordnet. Der aufgeschäumte Bereich 18a weist eine Dicke von ca. 300 µm auf. Das Bauelement 14a weist im aufgeschäumten Bereich 18a eine Vielzahl von Hohlräumen auf, welche jeweils zumindest teilweise durch wenigstens einen Feststoff aufgefüllt sind (nicht dargestellt). Bei dem Feststoff handelt es sich um Zirconiumdioxid, welches einer durch ein Aufschäumen verminderten Festigkeit des Bauelements 14a im Bereich 18a entgegenwirkt. Alternativ oder zusätzlich können die Hohlräume auch jeweils zumindest teilweise durch ein Farbpigment aufgefüllt sein, wodurch besonders vorteilhafte optische Effekte erzielt werden können.

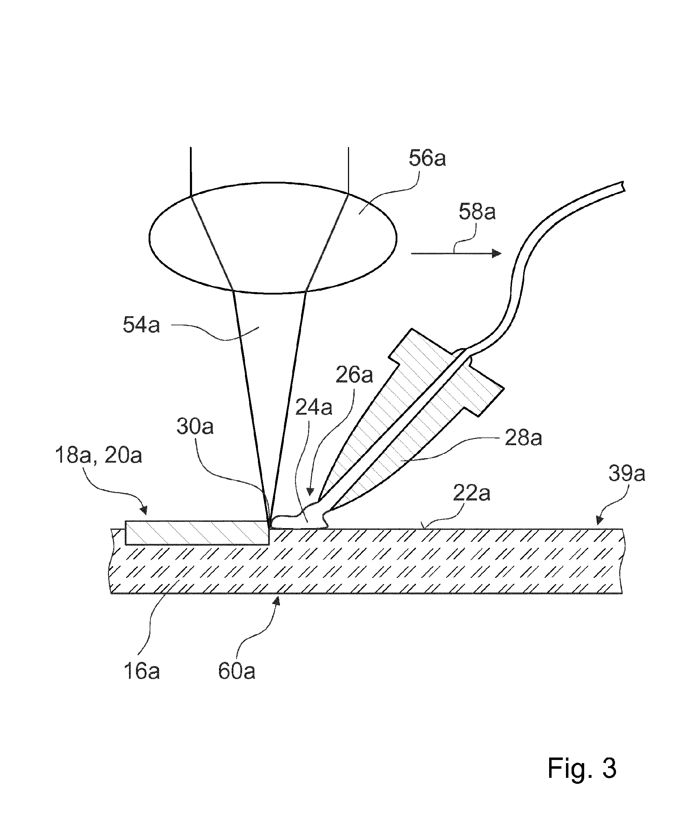

Figur 3 zeigt eine schematische und nicht maßstabsgetreue Darstellung eines Verfahrensschritts eines Verfahrens zu einer Herstellung der Kochfeldvorrichtung 12a. In dem Verfahrensschritt wird das Bauelement 14a aus einem Rohelement 16a durch Aufschäumen wenigstens eines Bereichs 18a hergestellt, wobei die durch das Aufschäumen erzeugten Hohlräume im Bereich 18a während des Aufschäumens zumindest teilweise durch den Feststoff aufgefüllt werden. Bei dem Bereich 18a handelt es sich um einen oberflächennahen Bereich 20a des Rohelements 16a. Das Aufschäumen wird mittels einer Laserbestrahlung durchgeführt. Laserlicht 54a wird mittels einer in Figur 3 lediglich schematisch dargestellten Laseroptik 56a auf eine Oberfläche 22a des Rohelements 16a fokussiert. Ein Durchmesser eines Laserfokus 30a liegt dabei zwischen 10 µm und 20 µm. Das Verfahren wurde mit drei verschiedenen Lasersystemen getestet.

Ein erstes Lasersystem umfasst einen Laser der Baureihe "E-Line 20" von ROFIN SINAR Technologies, einen mittels eines Güteschalters gepulst betriebenen diodengepumpten Nd:YAG Laser mit einer Fundamentalwellenlänge von 1064 nm und einer maximalen mittleren Leistung von 11 W. Ein von dem Laser des ersten Lasersystems emittierter GaußStrahl TEM₀₀ weist eine Beugungsmaßzahl M² < 1,3 auf. Die Laseroptik 56a des ersten Lasersystems umfasst eine optische Linse mit einer Brennweite von 100 mm. Bei der Durchführung des Verfahrens mit dem ersten Lasersystem wird das Rohelement 16a vor dem Aufschäumen auf eine Temperatur zwischen 300°C und 400°C aufgewärmt. Beim Aufschäumen werden Laserpulse mit einer Pulsenergie von 2,45 mJ und einer Bestrahlungsstärke von 83 GW/cm² auf die Oberfläche 22a des Rohelements 16a fokussiert. Eine Pulswiederholfrequenz beträgt 2 kHz. Der Laserfokus 30a wird mit einer Geschwindigkeit 58a von 1 mm/s über die Oberfläche 22a bewegt. Der Laserfokus 30a wird in parallelen Linien mit einem Abstand von 10 µm zwischen benachbarten Linien über die Oberfläche 22a bewegt.

Ein zweites Lasersystem umfasst einen Laser der Baureihe "TruMark 6230" von TRUMPF Lasertechnik, einen mittels eines Güteschalters gepulst betriebenen diodengepumpten Nd:YVO₄ Laser mit einer Fundamentalwellenlänge von 532 nm und einer maximalen mittleren Leistung von 7,2 W. Ein von dem Laser des zweiten Lasersystems emittierter GaußStrahl TEM₀₀ weist eine Beugungsmaßzahl M² < 1,2 auf. Die Laseroptik 56a des zweiten Lasersystems umfasst eine optische Linse mit einer Brennweite von 160 mm. Bei der Durchführung des Verfahrens mit dem zweiten Lasersystem wird das Rohelement 16a bei Raumtemperatur mit Laserlicht 54a bestrahlt. Beim Aufschäumen werden Laserpulse mit einer Pulsenergie von 0,27 mJ und einer Bestrahlungsstärke von 28 GW/cm² auf die Oberfläche 22a des Rohelements 16a fokussiert. Eine Pulswiederholfrequenz beträgt 20 kHz. Der Laserfokus 30a wird mit einer Geschwindigkeit 58a von 25 mm/s über die Oberfläche 22a bewegt. Der Laserfokus 30a wird in parallelen Linien mit einem Abstand von 10 µm zwischen benachbarten Linien über die Oberfläche 22a bewegt.

Ein drittes Lasersystem umfasst einen Laser der Baureihe "PowerLine E20 THG" von ROFIN SINAR Technologies, einen mittels eines Güteschalters gepulst betriebenen diodengepumpten Nd:YVO₄ Laser mit einer Fundamentalwellenlänge von 355 nm und einer maximalen mittleren Leistung von 2 W. Ein von dem Laser des ersten Lasersystems emittierter Gauß-Strahl TEM₀₀ weist eine Beugungsmaßzahl M² < 1,3 auf. Die Laseroptik 56a des dritten Lasersystems umfasst eine optische Linse mit einer Brennweite von 160 mm. Bei der Durchführung des Verfahrens mit dem dritten Lasersystem wird das Rohelement 16a bei Raumtemperatur mit Laserlicht 54a bestrahlt. Beim Aufschäumen werden Laserpulse mit einer Pulsenergie von 0,13mJ und einer Bestrahlungsstärke von 8,5 GW/cm² auf die Oberfläche 22a des Rohelements 16a fokussiert. Eine Pulswiederholfrequenz beträgt 15 kHz. Der Laserfokus 30a wird mit einer Geschwindigkeit 58a von 60 mm/s über die Oberfläche 22a bewegt. Der Laserfokus 30a wird in parallelen Linien mit einem Abstand von 10 µm zwischen benachbarten Linien über die Oberfläche 22a bewegt.

Der Feststoff Zirconiumdioxid wird unmittelbar vor dem Aufschäumen auf die zu bearbeitende Oberfläche 22a des Rohelements 16a aufgebracht. Der Feststoff wird als ein Bestandteil einer Lösung 24a aufgebracht. Als Lösungsmittel der Lösung 24a kommt vorzugsweise Ethanol zum Einsatz. Die Lösung 24a wird unmittelbar vor dem Aufschäumen in einem zumindest weitgehend räumlich begrenzten Bereich 26a aufgebracht. Die Lösung 24a wird unmittelbar vor dem Aufschäumen mittels wenigstens eines Sprühkopfs 28a bereitgestellt, welcher gemeinsam mit dem Laserfokus 30a relativ zum Rohelement 16a bewegt wird. Dabei bewegen sich der Sprühkopf 28a und der Laserfokus 30a derart gemeinsam, dass der Bereich 26a, stets unmittelbar bevor er vom Laserfokus 30a überstrichen wird, mit der Lösung 24a benetzt wird. Durch die hohe Bestrahlungsstärke im Laserfokus 30a verdampft das Lösungsmittel der Lösung 24a und der Feststoff wird in den Hohlräumen des aufgeschäumten Bereichs 18a eingeschlossen.

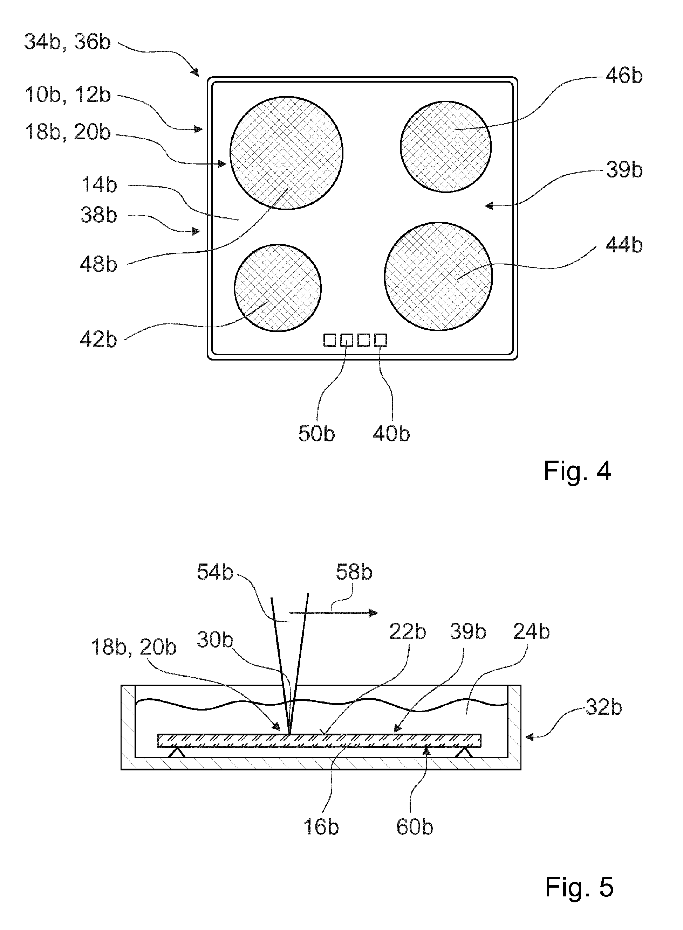

In Figuren 4 und 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figuren 4 und 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt ein weiteres Kochfeld 36b mit einer alternativen Kochfeldvorrichtung 12b in einer Draufsicht. Die Kochfeldvorrichtung 12b ist als eine Kochfeldplatte 38b ausgebildet. Ein plattenartiges Bauelement 14b der Kochfeldplatte 38b umfasst mehrere aufgeschäumte Bereiche 18b, von denen in Figur 4 lediglich einer bezeichnet ist. Die aufgeschäumten Bereiche 18b markieren Heizzonen 42b, 44b, 46b, 48b. Bei den aufgeschäumten Bereichen 18b handelt es sich um oberflächennahe Bereiche 20b. Jeder der Heizzonen 42b, 44b, 46b, 48b sind zwei aufgeschäumte Bereiche 18b zugeordnet, und zwar jeweils einer an einer Oberseite 39b und einer an einer Unterseite 60b des Bauelements 14b (nicht dargestellt). Zwei jeweils einer Heizzone 42b, 44b, 46b, 48b zugeordnete aufgeschäumte Bereiche 18b sind zueinander identisch ausgebildet und weisen eine Dicke von 500 µm auf. Jeder der Heizzonen 42b, 44b, 46b, 48b ist unterhalb der Kochfeldplatte 38b jeweils eine Heizeinheit zugeordnet (nicht dargestellt). Jede der Heizeinheiten umfasst zumindest ein Widerstandsheizelement. Die aufgeschäumten Bereiche 18b sind dazu vorgesehen, eine Wärmeleitfähigkeit des Bauelements 14b in einem Bereich der Heizzonen 42b, 44b, 46b, 48b zu vergrößern. Hierzu sind Hohlräume der aufgeschäumten Bereiche 18b zumindest teilweise mit einem Feststoff gefüllt. Bei dem Feststoff handelt es sich um Aluminiumoxid, welches sowohl eine mechanische Festigkeit als auch eine Wärmeleitfähigkeit des Bauelements 14b steigert.

Figur 5 zeigt eine schematische und nicht maßstabsgetreue Darstellung eines Verfahrensschritts eines Verfahrens zu einer Herstellung der Kochfeldvorrichtung 12b. In dem Verfahrensschritt wird das Bauelement 14b aus einem Rohelement 16b durch Aufschäumen wenigstens eines Bereichs 18b hergestellt, wobei die durch das Aufschäumen erzeugten Hohlräume im Bereich 18b während des Aufschäumens zumindest teilweise durch den Feststoff aufgefüllt werden. Der Feststoff wird unmittelbar vor dem Aufschäumen auf zumindest einer Oberfläche 22b des Rohelements 16b bereitgestellt. Der Feststoff wird als ein Bestandteil einer Lösung 24b bereitgestellt. Als Lösungsmittel der Lösung 24b wird vorzugsweise Ethanol verwendet. Die Lösung 24b wird in einem Tauchbad 32b bereitgestellt, in welches das Rohelement 16b eingetaucht wird. Laserlicht 54b wird durch die Lösung 24b hindurch auf die Oberfläche 22b des Rohelements 16b fokussiert. Durch eine Bestrahlung mit Laserlicht 54b wird der Bereich 18b aufgeschäumt, wobei das Lösungsmittel der Lösung 24b lokal verdampft und der Feststoff in den entstehenden Hohlräumen eingeschlossen wird. Als Lasersystem kann eines der oben genannten drei Lasersysteme zum Einsatz kommen.

**Bezugszeichen**

| | | | |
|---|---|---|---|
| 10 | Hausgerätevorrichtung | 60 | Unterseite |
| 12 | Kochfeldvorrichtung | | |
| 14 | Bauelement | | |
| 16 | Rohelement | | |
| 18 | Bereich | | |
| 20 | Bereich | | |
| 22 | Oberfläche | | |
| 24 | Lösung | | |
| 26 | Bereich | | |
| 28 | Sprühkopf | | |
| 30 | Laserfokus | | |
| 32 | Tauchbad | | |
| 34 | Hausgerät | | |
| 36 | Kochfeld | | |
| 38 | Kochfeldplatte | | |
| 39 | Oberseite | | |
| 40 | Markierung | | |
| 42 | Heizzone | | |
| 44 | Heizzone | | |
| 46 | Heizzone | | |
| 48 | Heizzone | | |
| 50 | Bedienelement | | |
| 52 | Markenlogo | | |
| 54 | Laserlicht | | |
| 56 | Laseroptik | | |
| 58 | Geschwindigkeit | | |

## Patentansprüche

1. Verfahren zu einer Herstellung einer Hausgerätevorrichtung (10a; 10b), insbesondere einer Kochfeldvorrichtung (12a; 12b), mit zumindest einem Bauelement (14a; 14b), bei welchem in zumindest einem Verfahrensschritt das Bauelement (14a; 14b) aus einem Rohelement (16a; 16b) durch Aufschäumen wenigstens eines Bereichs (18a; 18b) hergestellt wird, **dadurch gekennzeichnet, dass** zumindest ein durch das Aufschäumen erzeugter Hohlraum im wenigstens einen Bereich (18a; 18b) während des Aufschäumens zumindest teilweise durch wenigstens einen Feststoff aufgefüllt wird.

2. Verfahren nach Anspruch 1, **dadurch gekennzeichnet, dass** der wenigstens eine Bereich (18a; 18b) ein oberflächennaher Bereich (20a; 20b) des Rohelements (16a; 16b) ist.

3. Verfahren nach Anspruch 1 oder 2, **dadurch gekennzeichnet, dass** das Aufschäumen mittels einer Laserbestrahlung durchgeführt wird.

4. Verfahren nach einem der vorhergehenden Ansprüche, **dadurch gekennzeichnet, dass** der wenigstens eine Feststoff vor dem Aufschäumen auf zumindest einer Oberfläche (22a; 22b) des Rohelements (16a; 16b) bereitgestellt wird.

5. Verfahren nach einem der vorhergehenden Ansprüche, **dadurch gekennzeichnet, dass** der wenigstens eine Feststoff vor dem Aufschäumen zumindest als ein Bestandteil einer Lösung (24a; 24b) bereitgestellt wird.

6. Verfahren nach Anspruch 5, **dadurch gekennzeichnet, dass** die Lösung (24a) vor dem Aufschäumen in einem zumindest weitgehend räumlich begrenzten Bereich (26a) bereitgestellt wird.

7. Verfahren nach Anspruch 5 oder 6, **dadurch gekennzeichnet, dass** die Lösung (24a) vor dem Aufschäumen mittels wenigstens eines Sprühkopfs (28a) bereitgestellt wird, welcher gemeinsam mit zumindest einem Laserfokus (30a) relativ zum Rohelement (16a) bewegt wird.

8. Verfahren zumindest nach Anspruch 5, **dadurch gekennzeichnet, dass** die Lösung (24b) vor dem Aufschäumen in einem Tauchbad (32b) bereitgestellt wird, in welches das Rohelement (16b) zumindest teilweise eingetaucht wird.

9. Hausgerätevorrichtung (10a; 10b), insbesondere Kochfeldvorrichtung (12a; 12b), welche insbesondere durch ein Verfahren nach einem der vorhergehenden Ansprüche hergestellt ist, mit einem Bauelement (14a; 14b), welches wenigstens einen aufgeschäumten Bereich (18a; 18b) aufweist, **dadurch gekennzeichnet, dass** wenigstens ein allseitig von Material umschlossener Hohlraum im wenigstens einen Bereich (18a; 18b) zumindest teilweise durch wenigstens einen Feststoff aufgefüllt ist.

10. Hausgerät (34a; 34b), insbesondere Kochfeld (36a; 36b), mit einer Hausgerätevorrichtung (10a; 10b) nach Anspruch 9.
